# EUROPÄISCHE PATENTSCHRIFT

(11) **EP 3 908 488 B1**
(45) Veröffentlichungstag und Bekanntmachung des Hinweises auf die Patenterteilung: **11.06.2025**
(21) Anmeldenummer: 19831698.6
(22) Anmeldetag: 19.12.2019
(51) Int. Cl.: B60T 8/171, B60T 8/88

(54) **VORRICHTUNG UND VERFAHREN ZUM BESTIMMEN EINER DREHZAHL ZUMINDEST EINES RADES EINES FAHRZEUGS**
APPARATUS AND METHOD FOR DETERMINING A ROTATIONAL SPEED OF AT LEAST ONE WHEEL OF A VEHICLE
DISPOSITIF ET PROCÉDÉ POUR DÉTERMINER UNE VITESSE DE ROTATION D'AU MOINS UNE ROUE D'UN VÉHICULE

(30) Priorität: 09.01.2019 DE 102019100354
(43) Veröffentlichungstag der Anmeldung: 17.11.2021
(73) Patentinhaber: KNORR-BREMSE Systeme für Nutzfahrzeuge GmbH, 80809 München (DE)
(72) Erfinder: KAUFMANN, Christian, 71063 Sindelfingen (DE); HECKER, Falk, 71706 Markgröningen (DE)
(86) Internationale Anmeldenummer: PCT/EP2019/086249
(87) Internationale Veröffentlichungsnummer: WO 2020/144038

(56) Entgegenhaltungen:
- DE-A1- 102014 221 901
- DE-A1- 102015 209 565
- DE-A1- 102016 222 628
- DE-A1- 19 635 440
- US-A1- 2018 290 642

## Beschreibung

Die vorliegende Erfindung bezieht sich auf eine Vorrichtung zum Bestimmen einer Drehzahl zumindest eines Rades eines Fahrzeugs und auf ein entsprechendes Verfahren.

Beim hochautomatisierten Fahren braucht ein Fahrer eines Fahrzeugs beispielsweise nicht permanent auf einem Fahrerplatz zu sitzen und für einen korrigierenden Eingriff zur Verfügung zu stehen. Daher können herkömmliche Rückfallebenen für kritische Situationen nicht zur Anwendung kommen. Falls ein primäres Bremssystem nicht zur Verfügung steht, sollte ein redundantes Bremssystem die Aufgabe des Fahrers übernehmen. Um im Redundanzfall beispielsweise eine ABS-Funktionalität abbilden zu können, sollen herkömmlicherweise beide Bremssysteme Signale von Drehzahlsensoren von Rädern einlesen.

Die DE 10 2016 222 628 A1 offenbart eine Sensoranordnung, die einen Sensor, eine erste und zweite Auswerteeinheit mit jeweils einem Messwiderstand, eine mit der ersten bzw. zweiten Auswerteeinheit verbundene erste und zweite Spannungsquelle und als Dioden-Zenerdioden-Kombinationen ausgeführte, mit dem Sensor verbundene Schaltmittel umfasst.

Vor diesem Hintergrund ist es die Aufgabe der vorliegenden Erfindung, eine verbesserte Vorrichtung zum Bestimmen einer Drehzahl zumindest eines Rades eines Fahrzeugs und ein verbessertes Verfahren zum Bestimmen einer Drehzahl zumindest eines Rades eines Fahrzeugs zu schaffen.

Diese Aufgabe wird durch eine Vorrichtung zum Bestimmen einer Drehzahl zumindest eines Rades eines Fahrzeugs und durch ein Verfahren zum Bestimmen einer Drehzahl zumindest eines Rades eines Fahrzeugs gemäß den Hauptansprüchen gelöst.

Gemäß Ausführungsformen kann insbesondere ein Sensorsignal von einem aktiven Drehzahlsensor zum Bestimmen einer Drehzahl eines Rades eines Fahrzeugs redundant eingelesen, genutzt und zusätzlich oder alternativ ausgewertet werden. Hierzu kann das Sensorsignal durch ein erstes Steuergerät und durch ein zweites Steuergerät abgegriffen werden, wobei im Falle einer Fehlfunktion eines der Steuergeräte das Sensorsignal durch das funktionsfähige Steuergerät abgegriffen werden kann. Somit kann das Sensorsignal mindestens durch ein Steuergerät abgegriffen bzw. eingelesen, genutzt und zusätzlich oder alternativ ausgewertet werden.

Vorteilhafterweise kann gemäß Ausführungsformen insbesondere auf platzsparende Weise eine Redundanz bezüglich eines Drehzahlsensors hergestellt werden, ohne den Sensor doppelt auszuführen. Somit kann eine redundante Nutzung eines aktiven Drehzahlsensors auch auf kostengünstige Weise erreicht werden, da jeder zusätzliche Sensor Mehrkosten bedeuten würde. Es kann beispielsweise für redundant ausgeführte Bremssysteme eine ABS-Funktionalität auf einfache Weise realisiert werden. Somit können durch die redundante Nutzung eines einzigen Drehzahlsensors Kosten und Bauraum eingespart werden.

Es wird eine Vorrichtung zum Bestimmen einer Drehzahl zumindest eines Rades eines Fahrzeugs vorgestellt, wobei die Vorrichtung folgende Merkmale aufweist:
eine Erfassungseinrichtung zum Erfassen einer mit der Drehzahl in Korrelation stehenden Winkelgeschwindigkeit des Rades, wobei die Erfassungseinrichtung ausgebildet ist, um abhängig von der erfassten Winkelgeschwindigkeit ein elektrisches Erfassungssignal bereitzustellen;
ein erstes Steuergerät mit einer ersten Messeinrichtung zum Messen des Erfassungssignals, wobei das erste Steuergerät elektrisch mit der Erfassungseinrichtung verbunden ist; und
ein zweites Steuergerät mit einer zweiten Messeinrichtung zum Messen des Erfassungssignals, wobei das zweite Steuergerät elektrisch mit der Erfassungseinrichtung verbunden ist, wobei die Erfassungseinrichtung elektrisch zwischen die erste Messeinrichtung und die zweite Messeinrichtung schaltbar oder geschaltet ist.

Bei dem Fahrzeug kann es sich um ein Nutzfahrzeug handeln, wie beispielsweise einen Lastkraftwagen oder dergleichen. Bei den Steuergeräten kann es sich um Mikrocontroller oder dergleichen handeln. Die Erfassungseinrichtung kann als eine gesteuerte Stromquelle fungieren. Das elektrische Erfassungssignal kann ein Stromsignal sein. Unter dem Messen des Erfassungssignals kann ein Ermitteln einer Signalcharakteristik oder Signaleigenschaft des Erfassungssignals verstanden werden. Unter elektrisch verbunden kann eine Verbindung durch elektrische Leiter verstanden werden.

Gemäß der Erfindung weist das erste Steuergerät zumindest eine erste Schalteinrichtung auf, die ausgebildet ist, um bei einer Fehlfunktion des ersten Steuergeräts eine Übertragung des Erfassungssignals zwischen der ersten Messeinrichtung und der Erfassungseinrichtung zu unterbrechen. Das zweite Steuergerät weist zumindest eine zweite Schalteinrichtung auf, die ausgebildet ist, um bei einer Fehlfunktion des zweiten Steuergeräts eine Übertragung des Erfassungssignals zwischen der zweiten Messeinrichtung und der Erfassungseinrichtung zu unterbrechen. Eine Fehlfunktion kann ein Ausfall einer Komponente oder Energieversorgung eines Steuergeräts repräsentieren. Jede Schalteinrichtung kann in einem nicht mit elektrischer Energie versorgten Zustand eine geöffnete Position einnehmen, in der ein elektrischer Stromfluss unterbrochen ist. Eine solche Ausführungsform bietet den Vorteil, dass auf einfache und zuverlässige Weise eine Nutzung des Erfassungssignals durch lediglich fehlerfrei funktionierende Steuergeräte realisiert werden kann.

Dabei wird die erste Messeinrichtung elektrisch zwischen eine erste Schalteinrichtung und die Erfassungseinrichtung geschaltet. Die zweite Messeinrichtung wird elektrisch zwischen eine zweite Schalteinrichtung und die Erfassungseinrichtung geschaltet. Eine solche Ausführungsform bietet den Vorteil, dass die Nutzung des Erfassungssignals durch zumindest ein Steuergerät sicher und kostengünstig ermöglicht werden kann.

Ferner kann die Erfassungseinrichtung ausgebildet sein, um das Erfassungssignal mit von der Winkelgeschwindigkeit abhängigen elektrischen Strompegelfolgen bereitzustellen. Eine solche Ausführungsform bietet den Vorteil, dass eine zuverlässige und genaue Bestimmung der Drehzahl ermöglicht werden kann.

Auch kann das erste Steuergerät Teil einer ersten Redundanzebene eines Bremssystems des Fahrzeugs sein. Das zweite Steuergerät kann Teil einer zweiten Redundanzebene des Bremssystems des Fahrzeugs sein. Jede Redundanzebene kann zumindest eine eigene Energieversorgung und ein eigenes Steuergerät aufweisen. Eine solche Ausführungsform bietet den Vorteil, dass das Erfassungssignal direkt durch ohnehin vorgesehene Komponenten genutzt werden kann. Auch dadurch kann die Vorrichtung kostengünstig und platzsparende realisiert werden.

Gemäß der Erfindung weist die erste Messeinrichtung einen ersten elektrischen Strommesswiderstand und eine erste Auswerteeinrichtung zum Auswerten eines Spannungsabfalls über den ersten Strommesswiderstand auf. Die zweite Messeinrichtung weist einen zweiten elektrischen Strommesswiderstand und eine zweite Auswerteeinrichtung zum Auswerten eines Spannungsabfalls über den zweiten Strommesswiderstand auf. Eine solche Ausführungsform bietet den Vorteil, dass die Drehzahl auf einfache und genaue Weise redundant bestimmt werden kann. Dabei kann die zweite Auswerteeinrichtung elektrisch parallel zu dem zweiten Strommesswiderstand geschaltet sein. Die erste Messeinrichtung kann einen differenziellen Messwertverstärker aufweisen, der elektrisch parallel zu dem ersten Strommesswiderstand geschaltet ist. Die erste Auswerteeinrichtung kann an den Messwertverstärker angeschlossen sein. Bei dem Messwertverstärker kann es sich um einen Operationsverstärker handeln. Eine solche Ausführungsform bietet den Vorteil, dass eine unaufwendige und exakte Bestimmung der Drehzahl auf redundante Weise ermöglicht werden kann.

Auch weist dabei das erste Steuergerät einen ersten High-Side-Schalter, einen ersten Low-Side-Schalter, eine erste elektrische Spannungsquelle und einen ersten Masseanschluss auf. Die erste Spannungsquelle und der erste Masseanschluss sind elektrisch zwischen den ersten High-Side-Schalter und den ersten Low-Side-Schalter geschaltet. Der erste Strommesswiderstand ist elektrisch zwischen den ersten High-Side-Schalter und die Erfassungseinrichtung geschaltet. Das zweite Steuergerät weist einen zweiten High-Side-Schalter, einen zweiten Low-Side-Schalter, eine zweite elektrische Spannungsquelle und einen zweiten Masseanschluss auf. Die zweite Spannungsquelle und der zweite Masseanschluss sind elektrisch zwischen den zweiten High-Side-Schalter und den zweiten Low-Side-Schalter geschaltet. Der zweite Strommesswiderstand ist elektrisch zwischen den zweiten Low-Side-Schalter und die Erfassungseinrichtung geschaltet. Eine solche Ausführungsform bietet den Vorteil, dass auf kostengünstige und platzsparende Weise eine Nutzung des Erfassungssignals durch zumindest ein fehlerfrei funktionierendes Steuergerät erreicht werden kann, um eine redundante Bestimmung der Drehzahl zu realisieren.

Hierbei kann das erste Steuergerät einen zusätzlichen ersten Strommesswiderstand aufweisen, der elektrisch zwischen die erste Spannungsquelle und den ersten Low-Side-Schalter oder zwischen den ersten Low-Side-Schalter und die Erfassungseinrichtung geschaltet ist. Das zweite Steuergerät kann einen zusätzlichen zweiten Strommesswiderstand aufweisen, der elektrisch zwischen die Erfassungseinrichtung und den zweiten High-Side-Schalter oder zwischen den zweiten High-Side-Schalter und die zweite Spannungsquelle geschaltet ist. Jedem zusätzlichen Strommesswiderstand kann eine zusätzliche Auswerteeinrichtung zugeordnet sein. Eine solche Ausführungsform bietet den Vorteil, dass die Messung des Erfassungssignals noch exakter und zuverlässiger erfolgen kann.

Es wird auch ein Verfahren zum Bestimmen einer Drehzahl zumindest eines Rades eines Fahrzeugs vorgestellt, wobei das Verfahren unter Verwendung einer Ausführungsform der vorstehend genannten Vorrichtung ausgeführt wird. wobei das Verfahren folgende Schritte aufweist:
Erfassen der mit der Drehzahl in Korrelation stehenden Winkelgeschwindigkeit des Rades unter Verwendung der Erfassungseinrichtung, um abhängig von der erfassten Winkelgeschwindigkeit ein elektrisches Erfassungssignal bereitzustellen; und
Messen des Erfassungssignals unter Verwendung des ersten Steuergeräts bei fehlerfreiem Betrieb des ersten Steuergeräts, unter Verwendung des zweiten Steuergeräts bei fehlerfreiem Betrieb des zweiten Steuergeräts und unter Verwendung des ersten Steuergeräts und des zweiten Steuergeräts bei fehlerfreiem Betrieb des ersten Steuergeräts und des zweiten Steuergeräts, um die Drehzahl zu bestimmen.

Somit kann eine Nutzung des Erfassungssignals durch beide Steuergeräte, falls beide Steuergeräte fehlerfrei funktionieren, und durch ein fehlerfrei funktionierendes der Steuergeräte im Fall einer Störung bzw. eines Ausfalls eines der Steuergeräte realisiert werden, um die Drehzahl auf einfache und zuverlässige Weise redundant bestimmen zu können.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Fahrzeugs mit einer Vorrichtung gemäß einem Ausführungsbeispiel;
Fig. 2 eine schematische Darstellung einer Vorrichtung gemäß einem Ausführungsbeispiel; und
Fig. 3 ein Ablaufdiagramm eines Verfahrens zum Bestimmen gemäß einem Ausführungsbeispiel.

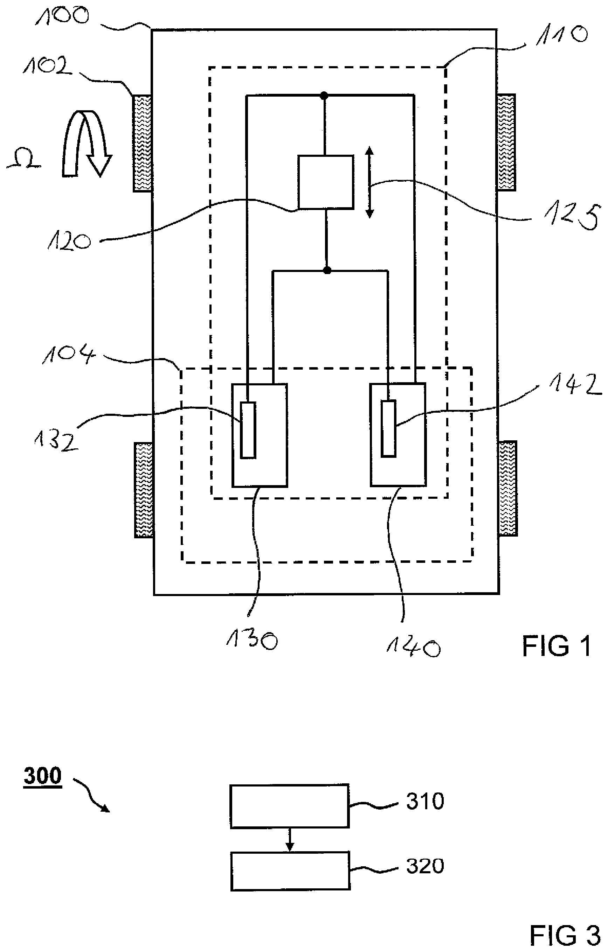

Fig. 1 zeigt eine schematische Darstellung eines Fahrzeugs 100 mit einer Vorrichtung 110 zum Bestimmen gemäß einem Ausführungsbeispiel. Das Fahrzeug 100 ist ein Kraftfahrzeug, beispielsweise ein Nutzfahrzeug, insbesondere ein Lastkraftwagen oder dergleichen. Das Fahrzeug 100 weist eine Mehrzahl von Rädern 102 auf. In der Darstellung von Fig. 1 ist aus Gründen der Übersichtlichkeit beispielhaft lediglich ein Rad 102 explizit bezeichnet. Das Rad 102 kann sich mit einer Winkelgeschwindigkeit Ω drehen, die in Korrelation mit einer Drehzahl des Rades 102 steht.

Das Fahrzeug 100 weist die Vorrichtung 110 zum Bestimmen bzw. eine Bestimmungsvorrichtung 110 auf. Die Bestimmungsvorrichtung 110 ist ausgebildet, um die Drehzahl des Rades 102 oder mehrerer Räder 102 des Fahrzeugs 100 zu bestimmen. Die Bestimmungsvorrichtung 110 weist gemäß dem hier dargestellten Ausführungsbeispiel eine Erfassungseinrichtung 120, ein erstes Steuergerät 130 und ein zweites Steuergerät 140 auf. Die Erfassungseinrichtung 120 ist hier lediglich für ein Rad dargestellt, wobei der Fachmann erkennen wird, dass für jedes der Räder 102 eine Erfassungseinrichtung 120 vorgesehen werden sollte.

Die Erfassungseinrichtung 120 ist ausgebildet, um die mit der Drehzahl des Rades 102 in Korrelation stehende Winkelgeschwindigkeit Ω des Rades 102 zu erfassen. Hierbei ist die Erfassungseinrichtung 120 zumindest dem Rad 102 zugeordnet. Gemäß einem Ausführungsbeispiel kann die Erfassungseinrichtung 120 auch mehrere Sensorelemente aufweisen, die mehreren Rädern 102 des Fahrzeugs 100 zugeordnet sein können. Alternativ kann die Bestimmungsvorrichtung 110 mehrere Erfassungseinrichtungen 120 (eine an jedem Rad) für mehrere Räder 102 des Fahrzeugs 100 aufweisen. Die Erfassungseinrichtung 120 ist ausgebildet, um abhängig von der erfassten Winkelgeschwindigkeit Ω ein elektrisches Erfassungssignal 125 bereitzustellen. Das Erfassungssignal 125 kann von der Winkelgeschwindigkeit Ω abhängige elektrische Strompegelfolgen I(Ω) bzw. Pegelfolgen eines elektrischen Stroms aufweisen. Die Erfassungseinrichtung 120 kann auch als ein Winkelgeschwindigkeitssensor 120 bezeichnet werden.

Die Erfassungseinrichtung 120 ist elektrisch mit dem ersten Steuergerät 130 und mit dem zweiten Steuergerät 140 verbunden. Somit sind das erste Steuergerät 130 und das zweite Steuergerät 140 auch signalübertragungsfähig mit der Erfassungseinrichtung 120 verbunden. Das erste Steuergerät 130 weist eine erste Messeinrichtung 132 zum Messen des Erfassungssignals 125 auf. Das zweite Steuergerät 140 weist eine zweite Messeinrichtung 142 zum Messen des Erfassungssignals 125 auf. Die Erfassungseinrichtung 120 ist elektrisch zwischen die erste Messeinrichtung 132 und die zweite Messeinrichtung 142 geschaltet. Genauer gesagt sind das erste Steuergerät 130 und das zweite Steuergerät 140 mittels zweier elektrischer Leitungen miteinander verbunden, wobei die Erfassungseinrichtung 120 elektrisch mit beiden elektrischen Leitungen verbunden ist. Eine erste der elektrischen Leitungen ist mit der ersten Messeinrichtung 132 verbunden. Eine zweite der elektrischen Leitungen ist mit der zweiten Messeinrichtung 142 verbunden.

Gemäß einem Ausführungsbeispiel weist das Fahrzeug 100 ein Bremssystem 104 mit einer ersten Ebene und einer Redundanzebene auf, wobei das Bremssystem 104 auch in der Fig. 1 nicht dargestellten Sensoren umfassen kann. Hierbei ist das erste Steuergerät 130 Teil der ersten Ebene des Bremssystems 104 oder derselben zugeordnet, wobei das zweite Steuergerät 140 Teil der Redundanzebene des Bremssystems 104 ist oder derselben zugeordnet ist.

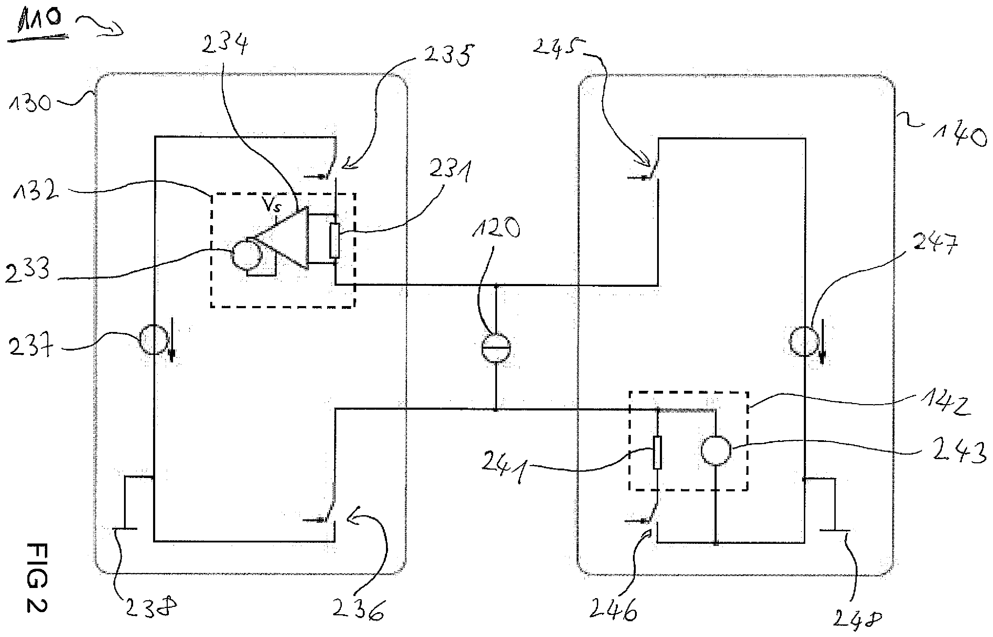

Auf die Bestimmungsvorrichtung 110 wird auch unter Bezugnahme auf Fig. 2 nachfolgend noch detaillierter eingegangen.

Fig. 2 zeigt eine schematische Darstellung einer Vorrichtung 110 zum Bestimmen bzw. Bestimmungsvorrichtung 110 gemäß einem Ausführungsbeispiel. Die Bestimmungsvorrichtung 110 entspricht oder ähnelt hierbei der Bestimmungsvorrichtung aus Fig. 1. Genauer gesagt entspricht die Bestimmungsvorrichtung 110 der Bestimmungsvorrichtung aus Fig. 1, wobei die Bestimmungsvorrichtung 110 in der Darstellung von Fig. 2 lediglich detaillierter dargestellt ist.

Das erste Steuergerät 130 weist gemäß dem hier dargestellten Ausführungsbeispiel einen ersten elektrischen Strommesswiderstand 231, eine erste Auswerteeinrichtung 233, einen differenziellen Messverstärker 234, einen ersten High-Side-Schalter 235, einen ersten Low-Side-Schalter 236, eine erste elektrische Spannungsquelle 237 und einen ersten Masseanschluss 238 auf. Genau genommen handelt es sich bei dem hier dargestellten differenziellen Messwertverstärker 234 um einen Operationsverstärker welcher als Stromspiegel dient um den Messwert auf GND zu beziehen. Hierbei sind der erste elektrische Strommesswiderstand 231, die erste Auswerteeinrichtung 233 und der differenzielle Messverstärker 234 Teile der ersten Messeinrichtung 132. Anders ausgedrückt weist die erste Messeinrichtung 132 den ersten elektrischen Strommesswiderstand 231, die erste Auswerteeinrichtung 233 und den differenziellen Messverstärker 234 auf.

Die erste Auswerteeinrichtung 233 ist ausgebildet, um einen Spannungsabfall über den ersten Strommesswiderstand 231 auszuwerten. Der Messverstärker 234 ist elektrisch parallel zu dem ersten Strommesswiderstand 231 geschaltet. Die erste Auswerteeinrichtung 233 ist an den Messverstärker 234 angeschlossen. Der Messverstärker 234 ist an eine elektrische Versorgungsspannung Vs angeschlossen. Beispielsweise arbeitet die erste Auswerteeinrichtung 233 gemäß dem sogenannten AK-Protokoll des Arbeitskreises der Automobilindustrie oder einem ähnlichen auf einer gesteuerten Stromquelle basierenden Protokoll.

Die erste Spannungsquelle 237 und der erste Masseanschluss 238 sind elektrisch zwischen den ersten High-Side-Schalter 235 und den ersten Low-Side-Schalter 236 geschaltet. Die erste Spannungsquelle 237 ist lediglich beispielhaft ausgebildet, um eine elektrische Spannung von 12 Volt bereitzustellen. Der erste Strommesswiderstand 231 ist elektrisch zwischen den ersten High-Side-Schalter 235 und die Erfassungseinrichtung 120 geschaltet. Somit ist die erste Messeinrichtung 132 elektrisch zwischen den ersten High-Side-Schalter 235 und die Erfassungseinrichtung 120 geschaltet. Der erste High-Side-Schalter 235 und der erste Low-Side-Schalter 236 repräsentieren erste Schalteinrichtungen. Jede der ersten Schalteinrichtungen ist ausgebildet, um bei einer Fehlfunktion des ersten Steuergeräts 130 eine Übertragung bzw. einen Übertragungspfad des Erfassungssignals zwischen der ersten Messeinrichtung 132 und der Erfassungseinrichtung 120 zu unterbrechen.

Das zweite Steuergerät 140 weist gemäß dem hier dargestellten Ausführungsbeispiel einen zweiten elektrischen Strommesswiderstand 241, eine zweite Auswerteeinrichtung 243, einen zweiten High-Side-Schalter 245, einen zweiten Low-Side-Schalter 246, eine zweite elektrische Spannungsquelle 247 und einen zweiten Masseanschluss 248 auf. Der zweite elektrische Strommesswiderstand 241 und die zweite Auswerteeinrichtung 243 sind Teile der zweiten Messeinrichtung 142. Anders ausgedrückt weist die zweite Messeinrichtung 142 den zweiten elektrischen Strommesswiderstand 241 und die zweite Auswerteeinrichtung 243 auf.

Die zweite Auswerteeinrichtung 243 ist ausgebildet, um einen Spannungsabfall über den zweiten Strommesswiderstand 241 auszuwerten. Dazu ist die zweite Auswerteeinrichtung 243 elektrisch parallel zu dem zweiten Strommesswiderstand 241 geschaltet. Die zweite Auswerteeinrichtung 243 arbeitet beispielsweise gemäß dem sogenannten AK-Protokoll des Arbeitskreises der Automobilindustrie oder einem ähnlichen auf einer gesteuerten Stromquelle basierenden Protokoll.

Die zweite Spannungsquelle 247 und der zweite Masseanschluss 248 sind elektrisch zwischen den zweiten High-Side-Schalter 245 und den zweiten Low-Side-Schalter 246 geschaltet. Die zweite Spannungsquelle 247 ist lediglich beispielhaft ausgebildet, um eine elektrische Spannung von 12 Volt bereitzustellen. Der zweite Strommesswiderstand 241 ist elektrisch zwischen den zweiten Low-Side-Schalter 246 und die Erfassungseinrichtung 120 geschaltet. Somit ist die zweite Messeinrichtung 142 elektrisch zwischen den zweiten Low-Side-Schalter 246 und die Erfassungseinrichtung 120 geschaltet. Der zweite High-Side-Schalter 245 und der zweite Low-Side-Schalter 246 repräsentieren zweite Schalteinrichtungen. Jede der zweiten Schalteinrichtungen ist ausgebildet, um bei einer Fehlfunktion des zweiten Steuergeräts 140 eine Übertragung bzw. einen Übertragungspfad des Erfassungssignals zwischen der zweiten Messeinrichtung 142 und der Erfassungseinrichtung 120 zu unterbrechen.

Gemäß einem Ausführungsbeispiel kann das erste Steuergerät 130 einen zusätzlichen ersten Strommesswiderstand bzw. einen ersten Low-Side-Strommesswiderstand aufweisen, der elektrisch zwischen die erste Spannungsquelle 237 und den ersten Low-Side-Schalter 236 oder zwischen den ersten Low-Side-Schalter 236 und die Erfassungseinrichtung 120 geschaltet sein kann. Das zweite Steuergerät 140 kann hierbei einen zusätzlichen zweiten Strommesswiderstand bzw. einen zweiten High-Side-Strommesswiderstand aufweisen, der elektrisch zwischen die Erfassungseinrichtung 120 und den zweiten High-Side-Schalter 245 oder zwischen den zweiten High-Side-Schalter 245 und die zweite Spannungsquelle 247 geschaltet sein kann.

Die hier vorgestellte Messeinrichtung kann (auf beiden Seiten) auch zwischen Spannungsquelle und Schalter angeordnet sein.

Fig. 3 zeigt ein Ablaufdiagramm eines Verfahrens 300 zum Bestimmen gemäß einem Ausführungsbeispiel. Das Verfahren 300 zum Bestimmen ist ausführbar, um eine Drehzahl zumindest eines Rades eines Fahrzeugs zu bestimmen. Hierbei ist das Verfahren 300 zum Bestimmen unter Verwendung bzw. mittels bzw. in Verbindung mit der Vorrichtung aus einer der vorstehend beschriebenen Figuren oder einer ähnlichen Vorrichtung ausführbar.

In einem Schritt 310 des Erfassens wird bei dem Verfahren 300 zum Bestimmen die mit der Drehzahl in Korrelation stehende Winkelgeschwindigkeit des Rades unter Verwendung der Erfassungseinrichtung der Vorrichtung erfasst, um abhängig von der erfassten Winkelgeschwindigkeit das elektrische Erfassungssignal bereitzustellen. Hierzu wird die Erfassungseinrichtung unter Verwendung eines Ansteuersignals in geeigneter Weise angesteuert. Nachfolgend wird in einem Schritt 320 des Messens das Erfassungssignal gemessen, um die Drehzahl zu bestimmen. Dabei wird der Schritt 320 des Messens unter Verwendung zumindest eines der Steuergeräte ausgeführt. Genauer gesagt wird der Schritt 320 des Messens unter Verwendung aller der Steuergeräte ausgeführt, die einen fehlerfreien Betrieb aufweisen. Insbesondere wird der Schritt 320 des Messens unter Verwendung des ersten Steuergeräts bei fehlerfreiem Betrieb des ersten Steuergeräts, unter Verwendung des zweiten Steuergeräts bei fehlerfreiem Betrieb des zweiten Steuergeräts und unter Verwendung des ersten Steuergeräts und des zweiten Steuergeräts bei fehlerfreiem Betrieb des ersten Steuergeräts und des zweiten Steuergeräts ausgeführt.

Anders ausgedrückt und unter Bezugnahme auf die vorstehend beschriebenen Figuren kann die Erfassungseinrichtung 120, die auch als ein Sensor bezeichnet werden kann, als eine gesteuerte Stromquelle betrachtet werden. Die Erfassungseinrichtung 120 gibt als Erfassungssignal 125 hierbei spezifische Strompegelfolgen abhängig von der Winkelgeschwindigkeit Ω des Rads 102 aus. Zur Erfassung wird der elektrische Strom bzw. das Erfassungssignal 125 über die Strommesswiderstände 231 und 241 geführt und der Spannungsabfall bestimmt. Hierbei kann der aktive Drehzahlsensor 120 bzw. die Erfassungseinrichtung 120 doppelt genutzt werden, indem Strommesswiderstände 231 und 241 bzw. Shunts, jeweils einer je Steuergerät, in einer Reihenschaltung verwendet werden. Bei dem High-Side-Strommesswiderstand bzw. dem ersten Strommesswiderstand 231 des ersten Steuergeräts 130 wird zusätzlich der differenzielle Messverstärker 234 verwendet.

Wenn das erste Steuergerät 130 und das zweite Steuergerät 140 beide fehlerfrei funktionieren, sind der erste High-Side-Schalter 235 und der zweite Low-Side-Schalter 246 geschlossen, wobei der erste Low-Side-Schalter 236 und der zweite High-Side-Schalter 245 geöffnet sind. In einem solchen Betriebszustand der Bestimmungsvorrichtung 110 fließt elektrischer Strom aus dem ersten Steuergerät 130 über den ersten High-Side-Schalter 235, den ersten Strommesswiderstand 231, die Erfassungseinrichtung 120, den zweiten Strommesswiderstand 241 und schließlich über den zweiten Schalter Low-Side-Schalter 246 zu dem zweiten Masseanschluss 248. Falls eines der Steuergeräte 130 und 140 ausfällt, kann eine Versorgung und Messung auch unabhängig geschehen. Hierbei sind jeweils die Schalter in dem fehlerbehafteten Steuergerät geöffnet und die Schalter in dem fehlerfrei funktionierenden Steuergerät geschlossen.

Auch kann als Schalter alternativ eine Schalteranordnung zum Einsatz kommen. Durch Masseversätze kann die Bodydiode von MOSFETS einwirken. Deshalb kommen in Realität oftmals zwei MOSFETS in Reihe zum Einsatz. Daraus resultieren dann auch neue mögliche Positionen an denen der Shunt platziert werden kann.

Masseversätze, welche durch Leitungswiderstände von Zuleitungen und durch verschiedene Stromabnahmen der Steuergeräte 130 und 140 hervorgerufen werden können, führen zu einer veränderlichen Betriebsspannung der Erfassungseinrichtung 120. Wenn die Erfassungseinrichtung 120 in einem Spannungsbereich von 8 bis 20 Volt funktioniert, kann der Masseversatz auf beispielsweise höchstens 4 Volt begrenzt sein, wobei dieser Wert abhängig von der Versorgungsspannung ist. In diesem konkreten Fall beträgt der Mittelwert der Sensorbetriebsspannung (8 V + 20 V) / 2 = 14 V sowie der Abstand bei 14 V zum Rand 14 V - 8 V = 6 V.

### BEZUGSZEICHENLISTE

- 100: Fahrzeug
- 102: Rad
- 104: Bremssystem
- 110: Vorrichtung bzw. Bestimmungsvorrichtung
- 120: Erfassungseinrichtung
- 125: Erfassungssignal
- 130: erstes Steuergerät
- 132: erste Messeinrichtung
- 140: zweites Steuergerät
- 142: zweite Messeinrichtung
- Ω: Winkelgeschwindigkeit
- 231: erster elektrischer Strommesswiderstand
- 233: erste Auswerteeinrichtung
- 234: differenzieller Messverstärker
- 235: erster High-Side-Schalter
- 236: erster Low-Side-Schalter
- 237: erste elektrische Spannungsquelle
- 238: erster Masseanschluss
- 241: zweiter elektrischer Strommesswiderstand
- 243: zweite Auswerteeinrichtung
- 245: zweiter High-Side-Schalter
- 246: zweiter Low-Side-Schalter
- 247: zweite elektrische Spannungsquelle
- 248: zweiter Masseanschluss
- Vs: Versorgungsspannung
- 300: Verfahren zum Bestimmen
- 310: Schritt des Erfassens
- 320: Schritt des Messens

## Patentansprüche

1. Vorrichtung (110) zum Bestimmen einer Drehzahl zumindest eines Rades (102) eines Fahrzeugs (100), wobei die Vorrichtung (110) folgende Merkmale aufweist:
eine Erfassungseinrichtung (120) zum Erfassen einer mit der Drehzahl in Korrelation stehenden Winkelgeschwindigkeit (Ω) des Rades (102), wobei die Erfassungseinrichtung (120) ausgebildet ist, um abhängig von der erfassten Winkelgeschwindigkeit (Ω) ein elektrisches Erfassungssignal (125) bereitzustellen;
ein erstes Steuergerät (130) mit einer ersten Messeinrichtung (132; 231, 233, 234) zum Messen des Erfassungssignals (125), wobei das erste Steuergerät (130) elektrisch mit der Erfassungseinrichtung (120) verbunden ist, wobei das erste Steuergerät (130) zumindest eine erste Schalteinrichtung (235, 236) aufweist, die ausgebildet ist, um bei einer Fehlfunktion des ersten Steuergeräts (130) eine Übertragung des Erfassungssignals (125) zwischen der ersten Messeinrichtung (132; 231, 233, 234) und der Erfassungseinrichtung (120) zu unterbrechen, wobei die erste Messeinrichtung (132; 231, 233, 234) einen ersten elektrischen Strommesswiderstand (231) und eine erste Auswerteeinrichtung (233) zum Auswerten eines Spannungsabfalls über den ersten Strommesswiderstand (231) aufweist, wobei das erste Steuergerät (130) einen ersten High-Side-Schalter (235), einen ersten Low-Side-Schalter (236), eine erste elektrische Spannungsquelle (237) und einen ersten Masseanschluss (238) aufweist, wobei die erste Spannungsquelle (237) und der erste Masseanschluss (238) elektrisch zwischen den ersten High-Side-Schalter (235) und den ersten Low-Side-Schalter (236) geschaltet sind, wobei der erste Strommesswiderstand (231) elektrisch zwischen den ersten High-Side-Schalter (235) und die Erfassungseinrichtung (120) geschaltet ist; und
ein zweites Steuergerät (140) mit einer zweiten Messeinrichtung (142; 241, 243) zum Messen des Erfassungssignals (125), wobei das zweite Steuergerät (140) elektrisch mit der Erfassungseinrichtung (120) verbunden ist, wobei die Erfassungseinrichtung (120) elektrisch zwischen die erste Messeinrichtung (132; 231, 233, 234) und die zweite Messeinrichtung (142; 241, 243) schaltbar oder geschaltet ist, wobei das zweite Steuergerät (140) zumindest eine zweite Schalteinrichtung (245, 246) aufweist, die ausgebildet ist, um bei einer Fehlfunktion des zweiten Steuergeräts (140) eine Übertragung des Erfassungssignals (125) zwischen der zweiten Messeinrichtung (142; 241, 243) und der Erfassungseinrichtung (120) zu unterbrechen, wobei die zweite Messeinrichtung (142; 241, 243) einen zweiten elektrischen Strommesswiderstand (241) und eine zweite Auswerteeinrichtung (243) zum Auswerten eines Spannungsabfalls über den zweiten Strommesswiderstand (241) aufweist, wobei das zweite Steuergerät (140) einen zweiten High-Side-Schalter (245), einen zweiten Low-Side-Schalter (246), eine zweite elektrische Spannungsquelle (247) und einen zweiten Masseanschluss (248) aufweist, wobei die zweite Spannungsquelle (247) und der zweite Masseanschluss (248) elektrisch zwischen den zweiten High-Side-Schalter (245) und den zweiten Low-Side-Schalter (246) geschaltet sind, wobei der zweite Strommesswiderstand (241) elektrisch zwischen den zweiten Low-Side-Schalter (246) und die Erfassungseinrichtung (120) geschaltet ist,
wobei die erste Messeinrichtung (132; 231, 233, 234) elektrisch zwischen eine erste Schalteinrichtung (235, 236) und die Erfassungseinrichtung (120) geschaltet ist, wobei die zweite Messeinrichtung (142; 241, 243) elektrisch zwischen eine zweite Schalteinrichtung (245, 246) und die Erfassungseinrichtung (120) geschaltet ist.

2. Vorrichtung (110) gemäß Anspruch 1, **dadurch gekennzeichnet, dass** die Erfassungseinrichtung (120) ausgebildet ist, um das Erfassungssignal (125) mit von der Winkelgeschwindigkeit (Ω) abhängigen elektrischen Strompegelfolgen bereitzustellen.

3. Vorrichtung (110) gemäß einem der vorangegangenen Ansprüche, **dadurch gekennzeichnet, dass** das erste Steuergerät (130) Teil einer ersten Redundanzebene eines Bremssystems (104) des Fahrzeugs (100) ist, wobei das zweite Steuergerät (140) Teil einer zweiten Redundanzebene des Bremssystems (104) des Fahrzeugs (100) ist.

4. Vorrichtung (110) gemäß einem der vorangegangenen Ansprüche, **dadurch gekennzeichnet, dass** die zweite Auswerteeinrichtung (243) elektrisch parallel zu dem zweiten Strommesswiderstand (241) geschaltet ist, wobei die erste Messeinrichtung (132; 231, 233, 234) einen differenziellen Messverstärker (234) aufweist, der elektrisch parallel zu dem ersten Strommesswiderstand (231) geschaltet ist, wobei die erste Auswerteeinrichtung (233) an den Messverstärker (234) angeschlossen ist.

5. Vorrichtung (110) gemäß einem der vorangegangenen Ansprüche, **dadurch gekennzeichnet, dass** das erste Steuergerät (130) einen zusätzlichen ersten Strommesswiderstand aufweist, der elektrisch zwischen die erste Spannungsquelle (237) und den ersten Low-Side-Schalter (236) oder zwischen den ersten Low-Side-Schalter (236) und die Erfassungseinrichtung (120) geschaltet ist, wobei das zweite Steuergerät (140) einen zusätzlichen zweiten Strommesswiderstand aufweist, der elektrisch zwischen die Erfassungseinrichtung (120) und den zweiten High-Side-Schalter (245) oder zwischen den zweiten High-Side-Schalter (245) und die zweite Spannungsquelle (247) geschaltet ist.

6. Verfahren (300) zum Bestimmen einer Drehzahl zumindest eines Rades (102) eines Fahrzeugs (100), wobei das Verfahren (300) unter Verwendung der Vorrichtung (110) gemäß einem der vorangegangenen Ansprüche ausgeführt wird, wobei das Verfahren (300) folgende Schritte aufweist:
Erfassen (310) der mit der Drehzahl in Korrelation stehenden Winkelgeschwindigkeit (Ω) des Rades (102) unter Verwendung der Erfassungseinrichtung (120), um abhängig von der erfassten Winkelgeschwindigkeit (Ω) ein elektrisches Erfassungssignal (125) bereitzustellen; und
Messen (320) des Erfassungssignals (125) unter Verwendung des ersten Steueraeräts (130) bei fehlerfreiem Betrieb des ersten Steuergeräts (130), unter Verwendung des zweiten Steuergeräts (140) bei fehlerfreiem Betrieb des zweiten Steuergeräts (140) und unter Verwendung des ersten Steuergeräts (130) und des zweiten Steuergeräts (140) bei fehlerfreiem Betrieb des ersten Steuergeräts (130) und des zweiten Steuergeräts (140), um die Drehzahl zu bestimmen.

## Claims

1. An apparatus (110) for determining a rotational speed of at least one wheel (102) of a vehicle (100), wherein the apparatus (110) has the following features:
a detection device (120) for detecting an angular velocity (Ω) of the wheel (102) that is correlated to the rotational speed, wherein the detection device (120) is designed to provide an electrical detection signal (125) depending on the angular velocity (Ω) detected;
a first control unit (130) with a first measurement device (132; 231, 233, 234) for measuring the detection signal (125), wherein the first control unit (130) is electrically joined to the detection device (120), wherein the first control unit (130) comprises at least one first switching device (235, 236) that is designed to interrupt a transmission of the detection signal (125) between the first measurement device (132; 231, 233, 234) and the detection device (120) in the event of a malfunction of the first control unit (130), wherein the first measurement device (132; 231, 233, 234) comprises a first electrical current measurement resistor (231) and a first evaluation device (233) for evaluating a voltage drop across the first current measurement resistor (231), wherein the first control unit (130) comprises a first high-side switch (235), a first low-side switch (236), a first electrical voltage source (237) and a first ground terminal (238), wherein the first voltage source (237) and the first ground terminal (238) are electrically connected between the first high-side switch (235) and the first low-side switch (236), wherein the first current measurement resistor (231) is electrically connected between the first high side switch (235) and the detection device (120), and
a second control unit (140) with a second measurement device (142; 241, 243) for measuring the detection signal (125), wherein the second control unit (140) is electrically joined to the detection device (120), wherein the detection device (120) can be electrically switched or is electrically switched between the first measurement device (132; 231, 233, 234) and the second measurement device (142; 241, 243), wherein the second control unit (140) comprises at least one second switching device (245, 246) that is designed to interrupt a transmission of the detection signal (125) between the second measurement device (142; 241, 243) and the detection device (120) in the event of a malfunction of the second control unit (140), wherein the second measurement device (142; 241, 243) comprises a second electrical current measurement resistor (241) and a second evaluation device (243) for evaluating a voltage drop across the second current measurement resistor (241), wherein the second control unit (140) comprises a second high-side switch (245), a second low-side switch (246), a second electrical voltage source (247) and a second ground terminal (248), wherein the second voltage source (247) and the second ground terminal (248) are electrically connected between the second high-side switch (245) and the second low-side switch (246), wherein the second current measurement resistor (241) is electrically connected between the second low-side switch (246) and the detection device (120),
wherein the first measurement device (132; 231, 233, 234) is electrically connected between a first switching device (235, 236) and the detection device (120), wherein the second measurement device (142; 241, 243) is electrically connected between a second switching device (245, 246) and the detection device (120).

2. The apparatus (110) as claimed in claim 1, **characterized in that** the detection device (120) is designed to provide the detection signal (125) with electrical current level sequences that depend on the angular velocity (Ω).

3. The apparatus (110) as claimed in one of the preceding claims, **characterized in that** the first control unit (130) is part of a first redundancy level of a braking system (104) of the vehicle (100), wherein the second control unit (140) is part of a second redundancy level of the braking system (104) of the vehicle (100).

4. The apparatus (110) as claimed in one of the preceding claims, **characterized in that** the second evaluation device (243) is electrically connected in parallel with the second current measurement resistor (241), wherein the first measurement device (132; 231, 233, 234) comprises a differential instrumentation amplifier (234) that is electrically connected in parallel with the first current measurement resistor (231), wherein the first evaluation device (233) is connected to the instrumentation amplifier (234).

5. The apparatus (110) as claimed in one of the preceding claims, **characterized in that** the first control unit (130) comprises an additional first current measurement resistor that is electrically connected between the first voltage source (237) and the first low-side switch (236) or between the first low-side switch (236) and the detection device (120), wherein the second control unit (140) comprises an additional second current measurement resistor that is electrically connected between the detection device (120) and the second high-side switch (245) or between the second high-side switch (245) and the second voltage source (247).

6. A method (300) for determining a rotational speed of at least one wheel (102) of a vehicle (100), wherein the method (300) can be carried out making use of the apparatus (110) as claimed in one of the preceding claims, wherein the
method (300) comprises the following steps:
detecting (310) the angular velocity (Ω) of the wheel (102) that is correlated to the rotational speed making use of the detection device (120) to provide an electrical detection signal (125) depending on the angular velocity (Ω) detected; and
measuring (320) the detection signal (125) making use of the first control unit (130) when the first control unit (130) is operating without fault, making use of the second control unit (140) when the second control unit (140) is operating without fault, and making use of the first control unit (130) and the second control unit (140) when the first control unit (130) and the second control unit (140) are operating without fault in order to determine the rotational speed.

## Revendications

1. Dispositif (110) pour déterminer une vitesse de rotation d'au moins une roue (102) d'un véhicule (100), dans lequel le dispositif (110) présente les caractéristiques suivantes :
un appareil de détection (120) pour détecter une vitesse angulaire (Ω) de la roue (102) en corrélation avec la vitesse de rotation, dans lequel l'appareil de détection (120) est conçu pour fournir un signal de détection électrique (125) en fonction de la vitesse angulaire (Ω) détectée ;
un premier appareil de commande (130) avec un premier appareil de mesure (132 ; 231, 233, 234) pour mesurer le signal de détection (125), dans lequel le premier appareil de commande (130) est relié électriquement à l'appareil de détection (120), dans lequel le premier appareil de commande (130) présente au moins un premier appareil de commutation (235, 236) qui est conçu pour, en cas de dysfonctionnement du premier appareil de commande (130), interrompre une transmission du signal de détection (125) entre le premier appareil de mesure (132 ; 231, 233, 234) et l'appareil de détection (120), dans lequel le premier appareil de mesure (132 ; 231, 233, 234) présente une première résistance électrique de mesure de courant (231) et un premier appareil d'évaluation (233) pour évaluer une chute de tension sur la première résistance de mesure de courant (231), dans lequel le premier appareil de commande (130) présente un premier commutateur côté haut (235), un premier commutateur côté bas (236), une première source de tension électrique (237) et un premier raccord de masse (238), dans lequel la première source de tension (237) et le premier raccord de masse (238) sont commutés électriquement entre le premier commutateur côté haut (235) et le premier commutateur côté bas (236), dans lequel la première résistance de mesure de courant (231) est commutée électriquement entre le premier commutateur côté haut (235) et l'appareil de détection (120) ; et
un second appareil de commande (140) avec un second appareil de mesure (142 ; 241, 243) pour mesurer le signal de détection (125), dans lequel le second appareil de commande (140) est relié électriquement à l'appareil de détection (120), dans lequel l'appareil de détection (120) est commutable ou commuté électriquement entre le premier appareil de mesure (132 ; 231, 233, 234) et le second appareil de mesure (142 ; 241, 243), dans lequel le second appareil de commande (140) présente au moins un second appareil de commutation (245, 246) qui est conçu pour, en cas de dysfonctionnement du second appareil de commande (140), interrompre une transmission du signal de détection (125) entre le second appareil de mesure (142 ; 241, 243) et l'appareil de détection (120), dans lequel le second appareil de mesure (142 ; 241, 243) présente une seconde résistance électrique de mesure de courant (241) et un second appareil d'évaluation (243) pour évaluer une chute de tension sur la seconde résistance de mesure de courant (241), dans lequel le second appareil de commande (140) présente un second commutateur côté haut (245), un second commutateur côté bas (246), une seconde source de tension électrique (247) et un second raccord de masse (248), dans lequel la seconde source de tension (247) et le second raccord de masse (248) sont commutés électriquement entre le second commutateur côté haut (245) et le second commutateur côté bas (246), dans lequel la seconde résistance de mesure de courant (241) est commutée électriquement entre le second commutateur côté bas (246) et l'appareil de détection (120),
dans lequel le premier appareil de mesure (132 ; 231, 233, 234) est commuté électriquement entre un premier appareil de commutation (235, 236) et l'appareil de détection (120), dans lequel le second appareil de mesure (142 ; 241, 243) est commuté électriquement entre un second appareil de commutation (245, 246) et l'appareil de détection (120).

2. Dispositif (110) selon la revendication 1, **caractérisé en ce que** l'appareil de détection (120) est conçu pour fournir le signal de détection (125) avec des séquences de niveau de courant électrique dépendantes de la vitesse angulaire (Ω).

3. Dispositif (110) selon l'une quelconque des revendications précédentes, **caractérisé en ce que** le premier appareil de commande (130) fait partie d'un premier niveau de redondance d'un système de freinage (104) du véhicule (100), dans lequel le second appareil de commande (140) fait partie d'un second niveau de redondance du système de freinage (104) du véhicule (100).

4. Dispositif (110) selon l'une quelconque des revendications précédentes, **caractérisé en ce que** le second appareil d'évaluation (243) est commuté électriquement en parallèle à la seconde résistance de mesure de courant (241), dans lequel le premier appareil de mesure (132 ; 231, 233, 234) présente un amplificateur de mesure différentiel (234) qui est commuté électriquement en parallèle à la première résistance de mesure de courant (231), dans lequel le premier appareil d'évaluation (233) est relié à l'amplificateur de mesure (234).

5. Dispositif (110) selon l'une quelconque des revendications précédentes, **caractérisé en ce que** le premier appareil de commande (130) présente une première résistance de mesure de courant supplémentaire qui est commutée électriquement entre la première source de tension (237) et le premier commutateur côté bas (236) ou entre le premier commutateur côté bas (236) et l'appareil de détection (120), dans lequel le second appareil de commande (140) présente une seconde résistance de mesure de courant supplémentaire qui est commutée électriquement entre l'appareil de détection (120) et le second commutateur côté haut (245) ou entre le second commutateur côté haut (245) et la seconde source de tension (247).

6. Procédé (300) de détermination d'une vitesse de rotation d'au moins une roue (102) d'un véhicule (100), dans lequel le procédé (300) est mis en œuvre en utilisant le dispositif (110) selon l'une quelconque des revendications précédentes, dans lequel le
procédé (300) présente les étapes suivantes :
détection (310) de la vitesse angulaire (Ω) de la roue (102) en corrélation avec la vitesse de rotation en utilisant l'appareil de détection (120) pour fournir un signal de détection électrique (125) en fonction de la vitesse angulaire détectée (Ω) ; et
mesure (320) du signal de détection (125) en utilisant le premier appareil de commande (130) lorsque le premier appareil de commande (130) fonctionne sans défaut, en utilisant le second appareil de commande (140) lorsque le second appareil de commande (140) fonctionne sans défaut et en utilisant le premier appareil de commande (130) et le second appareil de commande (140) lorsque le premier appareil de commande (130) et le second appareil de commande (140) fonctionnent sans défaut pour déterminer la vitesse de rotation.
